# EUROPEAN PATENT SPECIFICATION

(11) **EP 3 989 656 B1**
(45) Date of publication and mention of the grant of the patent: **10.09.2025**
(21) Application number: 19934011.8
(22) Date of filing: 21.06.2019
(51) Int. Cl.: H04B 7/06, H04L 5/00, H04W 88/02, H04B 7/0404

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(43) Date of publication of application: 27.04.2022
(73) Proprietor: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/024788
(87) International publication number: WO 2020/255395

(56) References cited:
- WO-A1-2019/066560
- LG ELECTRONICS: "Feature lead summary#2 of Enhancements on Multi-beam Operations", vol. RAN WG1, no. Reno, USA; 20190513 - 20190517, 16 May 2019 (2019-05-16), XP051740041, Retrieved from the Internet <URL:http://www.3gpp.org/ftp/tsg%5Fran/WG1%5FRL1/TSGR1%5F97/Docs/R1%2D1907768%2Ezip> [retrieved on 20190516]
- OPPO: "Remaining issues on codebook based UL transmission", vol. RAN WG1, no. Busan, Korea; 20180521 - 20180525, 20 May 2018 (2018-05-20), XP051442024, Retrieved from the Internet <URL:http://www.3gpp.org/ftp/Meetings%5F3GPP%5FSYNC/RAN1/Docs/> [retrieved on 20180520]
- CATT: "Enhancements on multi-beam operation", 3GPP TSG RAN WG1 #95 RL-1812636, 12 November 2018 (2018-11-12), XP051554592, Retrieved from the Internet <URL:http://www.3gpp.org/ftp/tsg_ran/WGl_RL1/TSGR1_95/Docs/R1-1812636.zip>

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement, and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

Non-Patent Literature 2 relates to enhancements on multi-beam operations.

WO 2019/066560 A1 relates to a wireless communication system, and more particularly, to a method for performing uplink transmission based on a sounding reference signal and a device supporting the same.

Non-Patent Literature 3 relates to specifications for codebook based UL transmission.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Non-Patent Literature 2: LG ELECTRONICS: "Feature lead summary#2 of Enhancements on Multi-beam Operations", 3GPP DRAFT; R1-1907768, 3RD GENERATION PARTNERSHIP PROJECT (3GPP), 2019-05-16

Non-Patent Literature 3: OPPO: "Remaining issues on codebook based UL transmission", 3GPP DRAFT; R1 -1806824, 3RD GENERATION PARTNERSHIP PROJECT (3GPP), 2018-05-20

### Summary of Invention

### Technical Problem

In future radio communication systems (for example, NR), a user terminal (User Equipment (UE)) controls transmission processing for uplink channels, signals, and the like (for example, at least one of transmission, mapping, precoding, modulation, and encoding), based on spatial relations.

In Rel-15 NR, configuration information for Sounding Reference Signal (SRS) resources configured for the UE includes spatial relation information (SRI). In other words, SRS resources and spatial relations are configured such that the SRS resources are associated with the spatial relations on a one-to-one basis. However, NR Rel-16 and later versions require dynamic changes in spatial relation for the SRS.

Thus, an object of the present disclosure is to provide a terminal and a radio communication method that can appropriately specify a spatial relation for an SRS.

### Solution to Problem

The present invention is defined by the attached independent claims. Other preferred embodiments may be found in the dependent claims.

### Advantageous Effects of Invention

According to one aspect of the present disclosure, a spatial relation for an SRS can be appropriately specified.

### Brief Description of Drawings

FIG. 1 is a diagram to show an example of SRS resource configuration information in Example 1-1;
FIG. 2 is a diagram to show an example of SRS resource configuration information in Example 1-2;
FIGS. 3A to 3D are diagrams to show an example of a MAC CE in Embodiment 1-2;
FIGS. 4A and 4B are diagrams to show examples of a transmission port switching pattern for an SRS;
FIG. 5 is a diagram to show an example of the transmission port switching pattern for the SRS;
FIGS. 6A and 6B are diagrams to show examples of batch update of spatial relations for a plurality of SRS resources;
FIG. 7 is a diagram to show an example of a schematic structure of a radio communication system according to one embodiment;
FIG. 8 is a diagram to show an example of a structure of a base station according to one embodiment;
FIG. 9 is a diagram to show an example of a structure of a user terminal according to one embodiment; and
FIG. 10 is a diagram to show an example of a hardware structure of the base station and the user terminal according to one embodiment.

### Description of Embodiments

### (SRS)

In NR, reference signals for measurement sounding reference signals (SRSs) have various usages. The SRSs in NR are utilized for downlink (DL) CSI measurement, beam management, and the like, as well as uplink (UL) CSI measurement also utilized in existing LTE (LTE Rel. 8 to Rel. 14).

The UE may be configured with one or a plurality of SRS resources. The SRS resources may be identified by SRS resource indices (SRIs).

Each SRS resource may include one or a plurality of SRS ports (may correspond to one or a plurality of SRS ports). For example, the number of ports for each SRS may be one, two, four, or the like.

The UE may be configured with one or a plurality of SRS resource sets. One SRS resource set may be associated with a certain number of SRS resources. The UE may use a common higher layer parameter for the SRS resources included in one SRS resource set. Note that the resource set in the present disclosure may be interpreted as a set, a resource group, a group, and so on.

Information related to the SRS resource or resource set may be configured for the UE by using higher layer signaling or physical layer signaling, or a combination of these.

Note that in the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

SRS configuration information (for example, the RRC information element "SRS-Config") may include SRS resource set configuration information, SRS resource configuration information, and so on.

The SRS resource set configuration information (for example, an RRC parameter "SRS-ResourceSet") may include information of an SRS resource set ID (Identifier) (SRS-ResourceSetId), a list of SRS resource IDs (SRS-ResourceId) used for the resource set, an SRS resource type, and the usage of SRSs.

In this regard, the SRS resource type may indicate any of a periodic SRS (P-SRS), a semi-persistent SRS (SP-SRS), or an aperiodic SRS (A-SRS). Note that the UE may periodically transmit the P-SRS and the SP-SRS (or periodically transmit the P-SRS and the SP-SRS after activation). The UE may transmit the A-SRS, based on an SRS request in the DCI.

The usage of the SRS (RRC parameter "usage," L1 (Layer 1) parameter "SRS-SetUse") may be, for example, beam management, codebook, non-codebook, antenna switching, and so on. For example, an SRS for the codebook or the non-codebook may be used to determine a precoder for transmission of a codebook- or non-codebook-based uplink shared channel (Physical Uplink Shared Channel (PUSCH) based on the SRI.

An SRS for beam management may be assumed such that one SRS resource can be exclusively transmitted for each SRS resource set at a certain time instant. Note that in a case that a plurality of SRS resources belong to different SRS resource sets, the SRS resources may be simultaneously transmitted.

The SRS resource configuration information (for example, the RRC parameter "SRS-Resource") may include the SRS resource ID (SRS-ResourceId), the number of SRS ports, the SRS port number, transmission Comb, SRS resource mapping (for example, positions of time and/or frequency resources, resource offsets, resource periodicity, a repeat count, the number of SRS symbols, an SRS bandwidth, and so on), hopping related information, an SRS resource type, a sequence ID, spatial relation information, and the like.

For each slot, the UE may switch the BWP (Bandwidth Part) in which the SRS is transmitted or switch the antenna. The UE may apply at least one of intra-slot hopping and inter-slot hopping to SRS transmission.

### (Spatial Relation)

In NR, based on a certain spatial relation, the UE controls transmission processing (for example, at least one of transmission, mapping, precoding, modulation, and encoding) for at least one of the uplink channel and the uplink signal (which may be referred to as the "channel/signal"; A/B may hereinafter similarly be interpreted as at least one of A and B).

A spatial relation applied to a certain channel/signal may be identified by spatial relation information (SRI) notified (configured) by using higher layer signaling. The spatial relation information for the SRS (for example, an RRC parameter "spatialRelationInfo") may indicate spatial relation information between a certain reference signal (RS) and the SRS.

The certain reference signal may be at least one of a synchronization signal block (SSB), a channel state information reference signal (CSI-RS), and a Sounding Reference Signal (SRS). In this regard, the SSB may be referred to as a synchronization signal/broadcast channel (Synchronization Signal/Physical Broadcast Channel (SS/PBCH).

The spatial relation information for the SRS may include at least one of an SSB index, a CSI-RS resource ID, and an SRS resource ID as the index of the certain reference signal above.

Note that in the present disclosure, the SSB index, the SSB resource ID, and an SSBRI (SSB Resource Indicator) may be interpreted as one another. The CSI RS index, the CSI RS resource ID, and a CRI (CSI-RS Resource Indicator) may be interpreted as one another. The SRS index, the SRS resource ID, and the SRI may be interpreted as one another.

The SRI configured may include at least one of the SSB index, the CSI-RS resource ID, and the SRS resource ID as the index of the certain RS. The SRI may include a service cell index, a bandwidth part (BWP) ID, and the like corresponding to the certain RS.

Note that in the present disclosure, the index, the ID, the indicator, the resource ID, and the like may be interpreted as one another.

In a case that the UE is configured, for a certain SRS resource, with spatial relation information related to the SSB or CSI-RS and the SRS, the SRS resource may be transmitted by using the same SRS spatial domain filter as that for reception of the SSB or the CSI-RS. In other words, in this case, the UE may assume that a UE reception beam for the SSB or the CSI-RS is the same as a UE transmission beam for the SRS.

In a case that the UE is configured, for a certain SRS (target SRS) resource, with spatial relation information related to the SRS (target SRS) and another SRS (reference SRS), the target SRS resource may be transmitted by using the same SRS spatial domain filter as that for transmission of the reference SRS. In other words, in this case, the UE may assume that the UE transmission beam for the reference SRS is the same as the UE transmission beam for the target SRS.

Note that a spatial domain filter for transmission of a base station, a downlink spatial domain transmission filter, and a transmission beam for the base station may be interpreted as one another. A spatial domain filter for reception of the base station, an uplink spatial domain reception filter (spatial domain receive filter), and a reception beam for the base station may be interpreted as one another.

A spatial domain filter for transmission of the UE, an uplink spatial domain transmission filter, and a transmission beam for the UE may be interpreted as one another. A spatial domain filter for reception of the UE, a downlink spatial domain reception filter (spatial domain receive filter), and a reception beam for the UE may be interpreted as one another.

Note that the spatial relation information (SRI) may correspond to the beam. For example, the UE may assume that UL transmissions corresponding to different pieces of SRI are transmitted by using different beams.

Beam indication for an uplink control channel (Physical Uplink Control Channel (PUCCH)) may be configured by higher layer signaling. For example, in a case that PUCCH spatial relation information includes a spatial relation information (SpatialRelationInfo) parameter, the UE may apply the parameter configured to the PUCCH. In a case that the PUCCH spatial relation information includes more than one spatial relation information parameter, a parameter to be applied to the PUCCH (to be activated) may be determined based on a MAC CE.

Note that the PUCCH spatial relation information may be information obtained by interpreting the SRS as the PUCCH in the above-described SRS spatial relation information, and thus, the description is not repeated.

The beam indication for the PUSCH may be determined based on an SRS Resource Indicator (SRI) field included in the DCI. The UE may transmit, based on the specified SRI, the PUSCH by using the same transmission beam as that for the corresponding SRS included in the SRSs configured by a higher layer. Note that this may similarly be applied to the beam indication for the SRS.

For example, in response to being configured with codebook-based PUSCH transmission, the UE may determine (select), based on the SRI field in the DCI, an SRS resource included in the SRS resource set in which the SRSs have a usage corresponding to the codebook.

In response to being configured with non-codebook-based PUSCH transmission, the UE may determine (select), based on the SRI field in the DCI, an SRS resource included in the SRS resource set in which the SRSs have a usage corresponding to the non-codebook.

Note that the number of SRS resources included in the SRS resource set having a usage corresponding to the codebook may be different from the number of SRS resources included in the SRS resource set having a usage corresponding to the non-codebook, and for example, the former may be two, whereas the latter may be four, or the like. In this case, the size of the SRI field may be one bit for the former, two bits for the latter, or the like.

In the existing Rel-15 NR, the configuration information for the SRS resources is configured including the spatial relation information. In other words, SRS resources and spatial relations are configured such that the SRS resources are associated by RRC with the spatial relations on a one-to-one basis.

For example, in Rel-15 NR, the spatial relation is prevented from being dynamically changed for the A-SRS. However, Rel-16 NR and later versions also require dynamic changes in spatial relation for the A-SRS.

Thus, the inventors of the present invention came up with the idea of a method for appropriately configuring (or specifying) the spatial relation for the SRS. According to one aspect of the present disclosure, a UL beam for the SRS, a UL beam for the PUSCH, and the like can be flexibly controlled.

Embodiments according to the present invention will be described in detail with reference to the drawings as follows. The radio communication methods according to respective embodiments may each be employed individually, or may be employed in combination.

Note that the SRI in the following embodiments may be interpreted as spatial relation information for SRS (which may be referred to as SRI for SRS, SRS spatial relation info, and so on). "Applying the SRI ID (or the SRI corresponding to the SRI ID) to a certain channel/signal" may be interpreted as "applying, to a certain channel/signal, the spatial relation corresponding to the SRI ID."

In the following embodiments, even in a case that the UE is configured with a spatial relation configured by RRC on a one-to-one basis with such an SRS resource as defined in existing NR specifications ("SRS-SpatialRelationInfo" included in the RRC information element "SRS-Resource"), the UE may ignore the spatial relation or assume that the spatial relation is overridden (for example, the spatial relation is overridden by a spatial relation activated by a MAC CE).

The following embodiments may be applied to one of the spatial relations (SRI) for A-SRS, P-SRS, and SP-SRS in a limited manner, to two of them (for example, A-SRS and P-SRS) in a limited manner, or to all of them.

Note that, in the present disclosure, the following may be interpreted as one another: a panel, an Uplink (UL) transmission entity, a TRP, a spatial relation information (SRI), the spatial relation, a control resource set (CORESET), a PDSCH, a codeword, a base station, a certain antenna port (for example, demodulation reference signal (DMRS) port), a certain antenna port group (for example, a DMRS port group), a certain group (for example, a code division multiplexing (CDM)) group, a certain reference signal group, a CORESET group), and so on.

A panel Identifier (ID) and the panel may be interpreted as each other. In other words, a TRP ID and the TRP may be interpreted as each other, and a CORESET group ID and the CORESET group may be interpreted as each other. The ID and the index may be interpreted as each other.

In the present disclosure, the sequence, list, set, group, and the like may be interpreted as one another.

### (Radio Communication Method)

### <First Example>

A first example not covered by the claims relates to a dynamic change in SRI corresponding to the SRS.

The first example can be broadly classified into the following examples. (Example 1-1) RRC signaling configures one piece of SRI per one SRS resource, and (Example 1-2) RRC signaling configures more than one piece of SRI per one SRS resource.

### [Example 1-1]

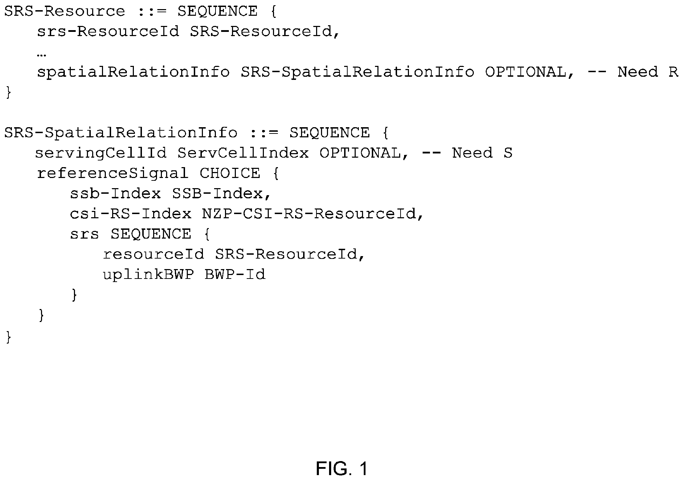

FIG. 1 is a diagram to show an example of SRS resource configuration information in Embodiment 1-1. FIG. 1 is illustrated by using ASN. 1 (Abstract Syntax Notation One) notation (note that FIG. 1 shows only an example and is not a complete illustration). Note that RRC parameter names are not limited to the names shown.

The SRS resource configuration information (RRC parameter "SRS-Resource") in FIG. 1 may be the same as that in Rel-15 NR for the SRI. For example, as shown in FIG. 1, "SRS-Resource" may include "SRS-SpatialRelationInfo" indicating one piece of spatial relation information.

### <<MAC CE in Example 1-1>>

In Example 1-1, for the UE, the spatial relation may be activated or deactivated for each SRS resource. Note that in the present disclosure, activate, deactivate, indication, selection, update, determination, and so on may be interpreted as one another.

For example, for the UE, the MAC CE may activate a reference signal resource used to derive a spatial relation for an SRS resource included in a certain SRS resource set. Such activation may be referred to as update (or override) of the spatial relation (SRI) corresponding to the SRS resource.

The MAC CE may include information indicating activation or deactivation, the SRS resource set ID of an SRS resource to be activated, the reference signal resource ID corresponding to the spatial relation for the SRS resource, and so on. Note that the reference signal resource ID may be, for example, at least one of a non-zero power CSI-RS reference index, the SSB index, the SRS resource ID, and the like. The MAC CE may include a service cell ID, a bandwidth part (BWP) ID, and the like to which the MAC CE is applied.

The UE may be configured with one or a plurality of SRS resources for one SRS resource set. Note that in response to being configured with more than one SRS resource for one SRS resource set, the UE may assume that the MAC CE activates one or a plurality of SRS resources included in the more than one SRS resource.

For example, in response to being configured with SRS resources #0 to #3 corresponding to SSBs #0 to #3 for a certain SRS resource set through RRC signaling, the UE may assume that one or a plurality of resources (for example, SRS resources #0 and #2) included in the SRS resources are activated.

On the other hand, in response to being configured with one SRS resource for one SRS resource set, the UE may assume that activation using the MAC CE is not performed for the SRS resource set (in other words, the SRS resources in the SRS resource set utilize a spatial relation configured by RRC).

### [Example 1-2]

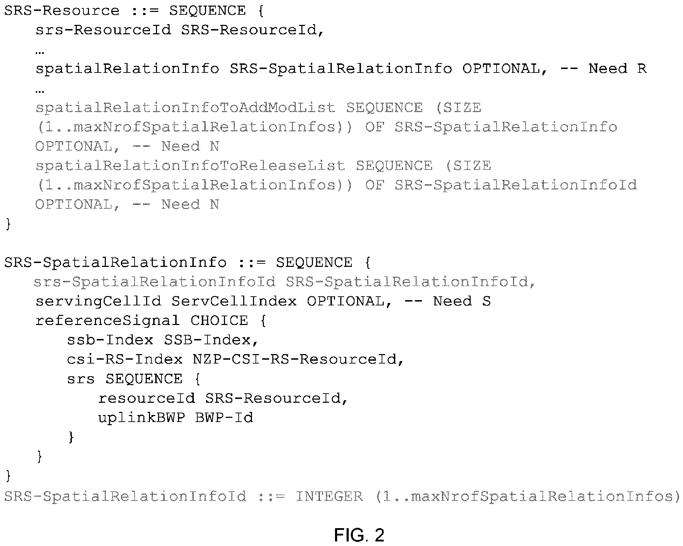

FIG. 2 is a diagram to show an example of SRS resource configuration information in Example 1-2. FIG. 2 is illustrated by using ASN. 1 notation (note that FIG. 2 shows only an example and is not a complete illustration). Note that RRC parameter names are not limited to the names shown.

The SRS resource configuration information in FIG. 2 (RRC parameter "SRS-Resource") may include a parameter "spatialRelationInfoToAddModList" indicating a list of one or more pieces of spatial relation information "SRS-SpatialRelationInfo."

Note that "maxNrofSpatialRelationInfos" may correspond to the maximum number of pieces of SRI that can be configured per SRS resource and may be, for example, 8, 16, 32, 64, or the like or greater than 64.

Note that "SRS-Resource" including "spatialRelationInfoToAddModList" may but need not necessarily include "SRS-SpatialRelationInfo" ("spatialRelationInfo") indicating one piece of spatial relation information as is the case with Rel-15 NR as shown in FIG. 2. The UE may assume, in response to being configured with one spatial relation per SRS resource, that the UE is configured with spatialRelationInfoToAddModList with a size of 1.

In a case that "SRS-Resource" including "spatialRelationInfoToAddModList" includes "SRS-SpatialRelationInfo" ("spatialRelationInfo"), the UE may assume that spatialRelationInfoToAddModList has a size of 2 or more.

In this regard, in response to being configured with spatialRelationInfo without being configured with spatialRelationInfoToAddModList, the UE may perform a UE operation for which a Rel-15 operation (configuration of one spatial relation per SRS resource) is assumed, and may assume that a MAC CE for the UE operation is received. In response to being configured with spatialRelationInfoToAddModList, the UE may perform a UE operation for which configuration of more than one spatial relation per SRS resource is assumed, and may assume that a MAC CE for the UE operation is received. Such a configuration allows the UE operation to be simplified.

"SRS-SpatialRelationInfo" in FIG. 2 may include an SRS spatial relation information ID ("SRS-SpatialRelationInfoId"). The ID may be used for activation using the MAC CE.

The UE may assume that the spatial relation (SRI) activated by the above-described MAC CE is applied to transmission of a certain signal /channel (for example, the PUSCH, SRS) for the SRS resource specified by the DCI.

### <<MAC CE in Example 1-2>>

In Example 1-2, for the UE, the spatial relation may be activated or deactivated for each SRS resource.

For example, for the UE, the MAC CE may activate a reference signal resource used to derive a spatial relation for an SRS resource included in a certain SRS resource set. Such activation may be referred to as update (or override) of the spatial relation (SRI) corresponding to the SRS resource.

The MAC CE may include information indicating activation or deactivation, the SRS resource set ID, the SRS resource ID, an SRS spatial relation ID to be activated, and so on. The MAC CE may include a service cell ID, a bandwidth part (BWP) ID, and the like to which the MAC CE is applied.

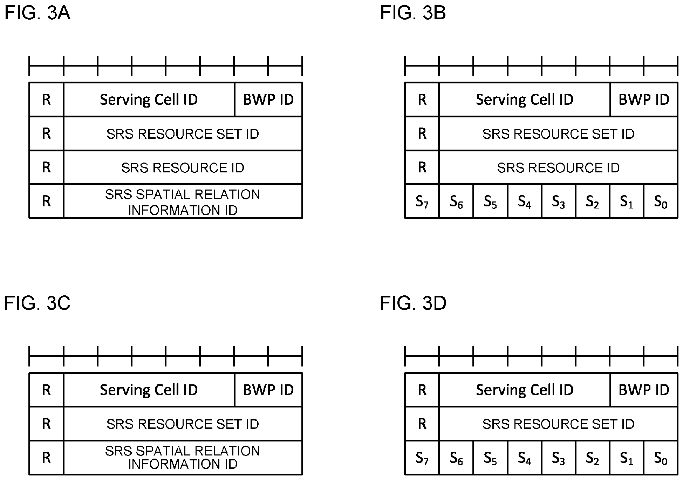

FIGS. 3A to 3D are diagrams to show an example of a MAC CE in Embodiment 1-2. Each example shows bit strings constituting the MAC CE and is expressed in 3 or 4 octets. Note that the number of bits in the MAC CE is not limited to this. The size of each field is also illustrative and is not limited to this.

The MAC CE may include information such as the serving cell ID ("Serving Cell ID" field), the BWP ID ("BWP ID" field), the SRS resource set ID ("SRS Resource Set ID" field), and the like of an application target.

Note that an "R" field may mean reserved bits for future extension.

For example, x bits corresponding to the field length (bit size) of the SRS spatial relation information ID in FIGS. 3A and 3C may be predefined by specifications (may be predefined as a fixed value) or predetermined according to the size of spatialRelationInfoToAddModList in FIG. 2.

The above-described MAC CE may include the SRS resource set ID, the SRS resource ID, and the SRS spatial relation ID to be activated, as shown in FIG. 3A. The UE may assume, based on the MAC CE, that a spatial relation for an SRS resource (corresponding to a designated SRS resource ID) included in a certain SRS resource set (corresponding to a designated SRS resource ID) corresponds to the spatial relation identified by the SRS spatial relation ID.

The above-described MAC CE may include the fields of the SRS resource set ID, the SRS resource ID, and "Sᵢ" (for example, i = 0 to 7), as shown in FIG. 3B. In a case that the field of certain Sᵢ indicates 1, the UE may activate the spatial relation (SRI) with the SRS spatial relation information ID = #i. In a case that the field of certain Sᵢ indicates 0, the UE may deactivate the spatial relation (SRI) with the SRS spatial relation information ID = #i.

FIGS. 3C and 3D correspond to the MAC CEs in FIGS. 3A and 3B which include no SRS resource ID field. As described above, in a case that the MAC CE includes no SRS resource ID field, the UE may assume that the spatial relation indicated by the MAC CE is activated for each of the SRS resources in the specified SRS resource set in common (in other words, activated in units of SRS resource sets).

Note that the UE may assume that at a certain time, only one piece of SRS spatial relation information is active for one SRS resource (or one SRS resource set) (in other words, a MAC CE need not be expected in which a plurality of Sᵢs are 1. Alternatively, the UE may allow a plurality of pieces of SRS spatial relation information to be active for one SRS resource (or one SRS resource set) at a certain time.

The UE may assume that the spatial relation (SRI) activated by the above-described MAC CE is applied to transmission of a certain signal /channel (for example, the PUSCH, SRS) for the SRS resource specified by the DCI.

According to the first example described above, the SRI corresponding to the SRS can be dynamically switched for utilization.

### <First Embodiment>

A first embodiment relates to a UE operation in a case that the spatial relation can be activated for each SRS resource as described in the first embodiment.

In Rel-15 NR, as the usage of the SRS described above, antenna switching (which may also be referred to as antenna port switching) can be configured as described above. The SRS antenna switching may be utilized, for example, in acquisition of downlink CSI in a time division duplex (TDD) band by using an uplink SRS.

In particular, for the UE having a capability corresponding to the number of antenna ports available for transmission being less than the number of antenna ports available for reception, UL SRS measurement may be utilized to determine a DL precoder.

Note that the UE may report, to the network, UE capability information (RRC parameter "supportedSRS-TxPortSwitch") indicating an SRS transmission port switching pattern. The pattern is expressed, for example, in an "xtyr" format such as "t1r2" or "t2r4," and this may signify that x antenna ports of a total of y antennas can be used for SRS transmission. In this regard, y may correspond to all or a subset of the receiving antennas of the UE.

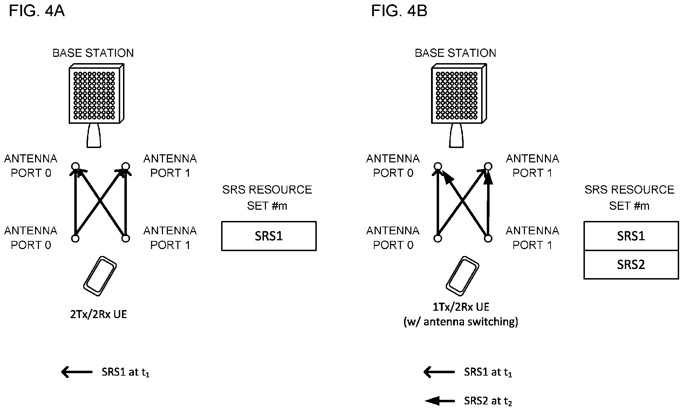

FIGS. 4A and 4B are diagrams to show examples of a transmission port switching pattern for the SRS. FIG. 4A is an example of the UE with "t2r2," and FIG. 4B is an example of the UE with "t1r2."

In a case that the number of antenna ports that can transmit the SRS is equal to or greater than the number of receiving antennas as in FIG. 4A, the UE can suitably achieve DL CSI acquisition by using one SRS resource to transmit the SRS from the transmitting antenna ports corresponding to the number of receiving antennas. For example, in a case that the UE is configured with one SRS resource (SRS1) in SRS resource set #m, the UE may use SRS1 at a certain point of time t₁ to transmit the SRS from each antenna port (antenna ports 0, 1).

On the other hand, in a case that the number of antenna ports that can transmit the SRS is less than the number of receiving antennas as in FIG. 4B, the UE can suitably achieve DL CSI acquisition by switching the transmitting antenna port among a plurality of times and using different SRS resources at the respective times to transmit the SRS. For example, in a case that the UE is configured with two SRS resources (SRS1, SRS2) in SRS resource set #m, the UE may use SRS1 at a certain point of time t₁ to transmit the SRS from a certain antenna port (antenna port 0) and use SRS2 at another point of time t₂ to transmit the SRS from another antenna port (antenna port 1). Note t₁ and t₂ may be in any order.

The spatial relation is configured by higher layer signaling for each SRS resource, and thus, activation using the MAC CE is properly performed in units of SRSs as illustrated in the first example.

On the other hand, in a case that the usage of the SRS resource set is antenna switching as in FIG. 4B, it may be assumed without any problem that the same spatial relation is utilized for the SRSs belonging to the SRS resource set. For example, in a case that the UE uses an analog beam for reception, the appropriate DL CSI acquisition may fail to be achieved unless the same analog beam is also used for transmission from each antenna port.

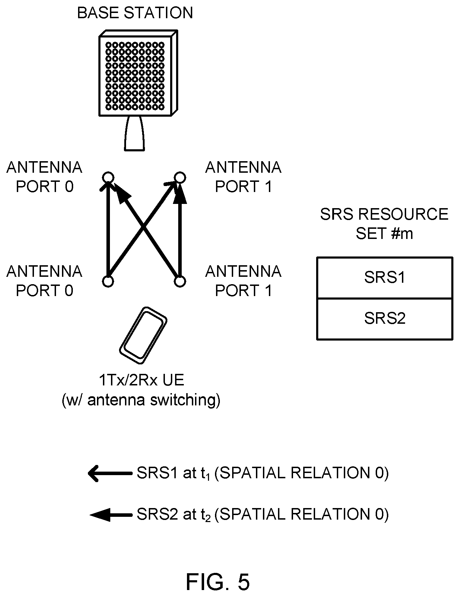

FIG. 5 is a diagram to show an example of the transmission port switching pattern for the SRS. FIG. 5 shows the same example as that in FIG. 4B, and thus, duplicate descriptions are avoided. FIG. 5 differs from FIG. 4B in that both SRS1 and SRS2 are transmitted by utilizing the same spatial relation 0. Traffic can be made smaller when the same spatial relation is applied to the SRS resource set as described above than when the individual SRS resources are activated by the MAC CE.

Thus, the inventors of the present invention came up with the idea of updating of each SRS resource set to the same spatial relation (a plurality of SRS resources collectively) under a specific condition. This is expected to reduce the overhead of the MAC CE required to update the spatial relation.

In a case that the UE is configured with more than one SRS resource in an SRS resource set having a usage different from a specific one (for example, antenna switching) and/or each SRS resource is configured with more than one spatial relation, the UE may assume that one spatial relation is activated per SRS resource by the MAC CE.

On the other hand, in a case that the UE is configured with more than one SRS resource in an SRS resource set having the specific usage (for example, antenna switching) and/or each SRS resource is configured with more than one spatial relation, the UE may assume that when the spatial relation for one SRS resource is activated by the MAC CE, the spatial relation for another SRS resource is also activated.

In a case that the UE is configured with more than one SRS resource in an SRS resource set having the specific usage (for example, antenna switching) and/or each SRS resource is configured with more than one spatial relation, the UE may assume that the spatial relation is activated in units of SRS resource sets (in other words, the spatial relations for a plurality of SRS resources are activated to the same spatial relation by the MAC CE).

Note that the batch update of the spatial relations for a plurality of SRS resources in a certain SRS resource set as described above may be assumed to be applied in a case that the spatial relations configured for the SRS resources are completely or partially identical (for example, in terms of a list, a permutation, combination, or the like of spatial relations) and when update to the same spatial relation is to be performed. For example, even in a case that the number of spatial relations (SRI) configured for the SRS resources varies, the above-described batch update may be applied.

Even in a case that the spatial relations configured for the SRS resources do not include the same spatial relation, the batch update as described above may be applied.

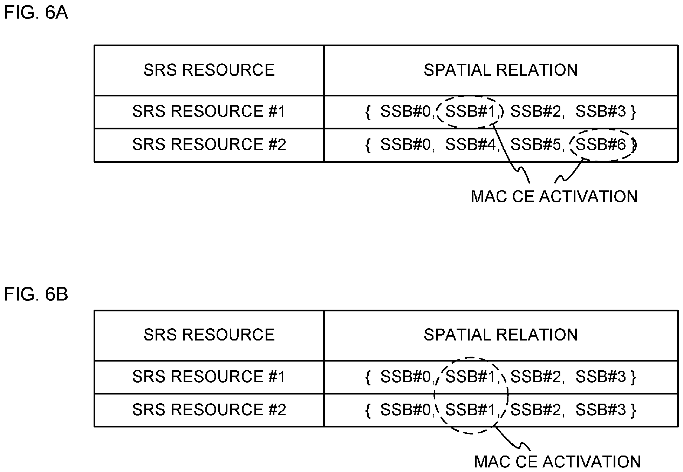

FIGS. 6A and 6B are diagrams to show examples of batch update of the spatial relations for a plurality of SRS resources. The SRS resources are assumed to belong to an SRS resource set having antenna switching as a usage.

FIG. 6A is an example in which the UE is configured with four spatial relations (spatial relations with {SSB #0, SSB #1, SSB #2, SSB #3}) for SRS resource #1 and configured with four spatial relations (spatial relations with {SSB #0, SSB #4, SSB #5, SSB #6}) for SRS resource #2.

The UE may assume that a list of spatial relations configured for SRS resource #1 is not the same as a list of spatial relations configured for SRS resource #2 and thus that the respective resources are activated by different MAC CEs (batch update is not applied). In FIG. 6A, for the UE, the spatial relation with SSB #1 may be activated for SRS resource #1 by the MAC CE, whereas the spatial relation with SSB #6 may be activated for SRS resource #2 by another MAC CE.

The MAC CE utilized in the case in FIG. 6A may be a MAC CE that can update the spatial relations in units of SRS resources as shown in FIGS. 3A and 3B.

Note that it may be assumed that even in the case in FIG. 6A, a spatial relation with SSB #0 common to SRS resources #1 and #2 can be batch-updated. It may be assumed that spatial relations not common to SRS resources #1 and #2 are not batch-updated.

It may be assumed that even in the case in FIG. 6A, the spatial relations not common to SRS resources #1 and #2 can also be batch-updated. For example, in response to receiving a MAC CE updating SRS resource #1 to the spatial relation with SSB #1, the UE may assume that SRS resource #2 is not configured with the spatial relation with SSB #1 but is updated to the spatial relation with SSB #1.

FIG. 6B is an example in which the UE is configured with four spatial relations (spatial relations with {SSB #0, SSB #1, SSB #2, SSB #3}) for SRS resource #1 and also configured with four spatial relations (spatial relations with {SSB #0, SSB #1, SSB #2, SSB #3}) for SRS resource #2.

The UE may assume that the list of spatial relations configured for SRS resource #1 is the same as the list of spatial relations configured for SRS resource #2 and thus that the resources are activated by the same single MAC CE (batch update is applied). In the case in FIG. 6B, for the UE, the spatial relation with SSB #1 may be activated for both SRS resources #1 and #2 by the MAC CE.

The MAC CE utilized in the case in FIG. 6B may be a MAC CE that can update the spatial relations in units of SRS resources as shown in FIGS. 3A and 3B. For example, in response to receiving a MAC CE updating SRS resource #1 to the spatial relation with SSB #1, the UE may also update SRS resource #2 to the spatial relation with SSB #1.

The MAC CE utilized in the case in FIG. 6B may be a MAC CE that can update the spatial relations in units of SRS resource sets as shown in FIGS. 3C and 3D. For example, in response to receiving a MAC CE updating each of the SRS resources in the SRS resource set to the spatial relation with SSB #1, the UE may update both SRS resources #1 and #2 to the spatial relation with SSB #1.

### <Other Examples>

Note that even in a case that the repeat count of a certain channel/signal is not explicitly configured or indicated to the UE, the UE may determine the repeat count of the channel/signal, based on at least one of the number of TCI states applied to the channel/signal (for example, the size of a TCI set utilized) and the number of RV sequences.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

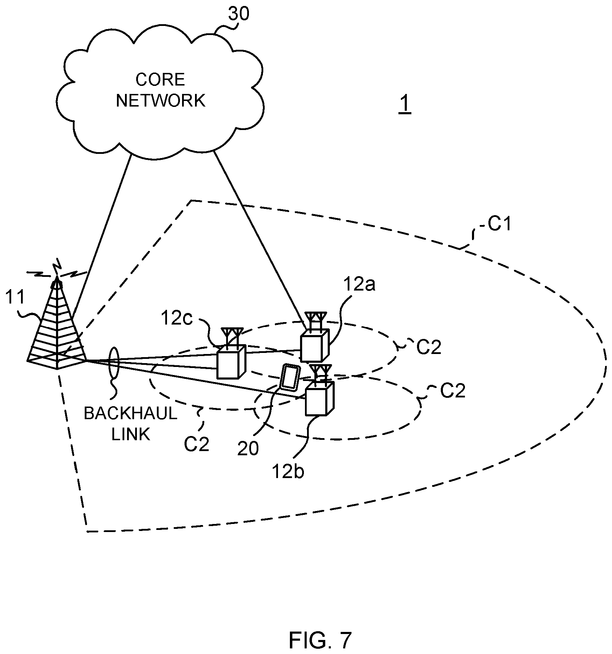

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

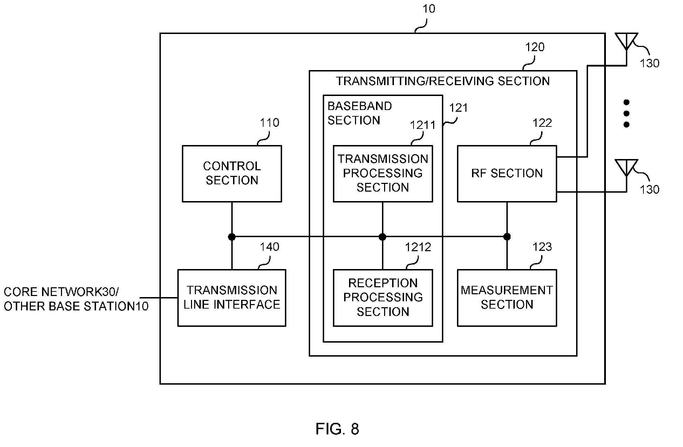

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, a Medium Access Control (MAC) control element (MAC CE) for activating spatial relation information (SRI) related to a Sounding Reference Signal (SRS) resource set. Note that the MAC CE may include at least one of information for identifying the SRS resource set, information for identifying the SRS resource, and the like.

### (User Terminal)

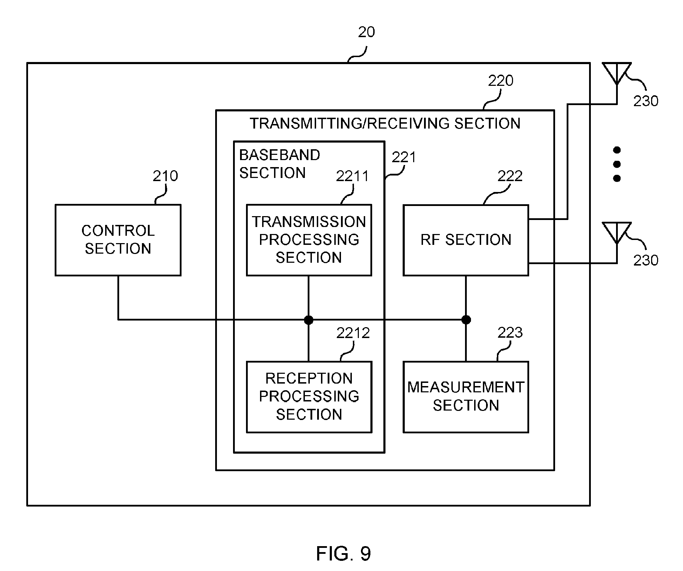

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit, to the user terminal 20, a Medium Access Control (MAC) control element (MAC CE) for activating spatial relation information (SRI) related to a Sounding Reference Signal (SRS) resource set. Note that the MAC CE may include at least one of information for identifying the SRS resource set, information for identifying the SRS resource, and the like.

Note that SRI in the present disclosure may be interpreted as a spatial relation.

In a case that the SRS resource set corresponds to a specific usage, the control section 210 may apply the SRI indicated by the MAC control element to a plurality of SRS resources in the SRS resource set.

The specific usage may be antenna switching.

In a case that the SRS resource set corresponds to a specific usage and that a common list of pieces of the SRI is configured for each of the plurality of SRS resources in the SRS resource set (e.g., completely or partially identical list), the control section 210 may apply, to the plurality of SRS resources in the SRS resource set, the SRI indicated by the MAC control element.

In a case that the MAC control element indicates one of the plurality of SRS resources, the control section 210 may apply, to another of the plurality of SRS resources, the SRI indicated by the MAC control element.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

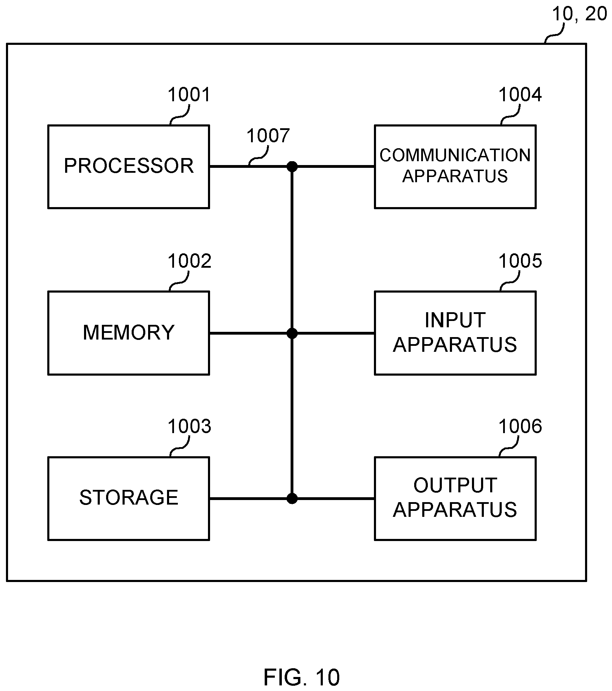

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some nonlimiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

## Claims

1. A terminal (20) comprising:
a receiving section (220) configured to receive Medium Access Control, MAC, control element to activate a transmission configuration indication, TCI, state applied to a plurality of sounding reference signal, SRS, resources of a SRS resource set; and
a control section (210), when a usage of the SRS resource set is antenna switching and when a common list for a plurality of TCI states including the TCI state is set for each of the plurality of SRS resources of the SRS resource set, configured to apply the TCI state activated by the MAC control element to the plurality of SRS resources of the SRS resource set.

2. A radio communication method for a terminal (20), comprising:
receiving Medium Access Control, MAC, control element to activate a transmission configuration indication, TCI, state applied to a plurality of sounding reference signal, SRS resources of a SRS resource set; and
when a usage of the SRS resource set is antenna switching and when a common list for a plurality of TCI states including the TCI state is set for each of the plurality of SRS resources of the SRS resource set, applying the TCI state activated by the MAC control element to the plurality of SRS resources of the SRS resource set.

3. A system comprising: a terminal (20) according to claim 1 and a base station (10), wherein
the base station (10) comprises:
a transmitting section (120) configured to transmit the MAC control element.

## Patentansprüche

1. Endgerät (20), umfassend:
einen Empfangsabschnitt (220), der so konfiguriert ist, dass er ein Medienzugangssteuerungs-, MAC-, Steuerelement empfängt, um einen Übertragungskonfigurationsangabe-, TCI-, Zustand zu aktivieren, der auf eine Vielzahl von Lotungsreferenzsignal-, SRS-, Ressourcen eines SRS-Ressourcensatzes angewendet wird; und
einen Steuerabschnitt (210), der, wenn eine Verwendung des SRS-Ressourcensatzes Antennenumschaltung ist, und wenn eine gemeinsame Liste für eine Vielzahl von TCI-Zuständen, die den TCI-Zustand einschließt, für jede der Vielzahl von SRS-Ressourcen des SRS-Ressourcensatzes festgelegt ist, so konfiguriert ist, dass sie den durch das MAC-Steuerelement aktivierten TCI-Zustand auf die Vielzahl von SRS-Ressourcen des SRS-Ressourcensatzes anwendet.

2. Funkkommunikationsverfahren für ein Endgerät (20), umfassend:
Empfangen eines Medienzugangssteuerungs-, MAC-, Steuerelements, um einen Übertragungskonfigurationsangabe-, TCI-, Zustand zu aktivieren, der auf eine Vielzahl von Lotungsreferenzsignal-, SRS-, Ressourcen eines SRS-Ressourcensatz angewendet wird; und
wenn eine Verwendung des SRS-Ressourcensatzes Antennenumschaltung ist, und wenn eine gemeinsame Liste für eine Vielzahl von TCI-Zuständen, die den TCI-Zustand einschließt, für jede der Vielzahl von SRS-Ressourcen des SRS-Ressourcensatzes festgelegt ist, Anwenden des durch das MAC-Steuerelement aktivierten TCI-Zustands auf die Vielzahl von SRS-Ressourcen des SRS-Ressourcensatzes.

3. System, umfassend: Endgerät (20) nach Anspruch 1 und Basisstation (10), wobei
die Basisstation (10) Folgendes umfasst:
einen Übertragungsabschnitt (120), der so konfiguriert ist, dass er das MAC-Steuerelement überträgt.

## Revendications

1. Terminal (20) comprenant :
une section de réception (220) configurée pour recevoir un élément de commande de contrôle d'accès au support, Medium Access Control - MAC, afin d'activer un état d'indication de configuration de transmission, transmission configuration indication - TCI, appliqué à une pluralité de ressources de signal de référence de sondage, sounding reference signal - SRS, d'un ensemble de ressources SRS ; et
une section de commande (210), lorsqu'une utilisation de l'ensemble de ressources SRS est une commutation d'antenne et lorsqu'une liste commune d'une pluralité d'états TCI incluant l'état TCI est définie pour chacune de la pluralité de ressources SRS de l'ensemble de ressources SRS, qui est configurée pour appliquer l'état TCI activé par l'élément de commande MAC sur la pluralité de ressources SRS de l'ensemble de ressources SRS.

2. Procédé de radio communication pour un terminal (20), comprenant :
la réception d'un élément de commande de contrôle d'accès au support, Medium Access Control - MAC afin d'activer un état d'indication de configuration de transmission, transmission configuration indication - TCI, appliqué à une pluralité de ressources de signal de référence de sondage, sounding reference signal - SRS, d'un ensemble de ressources SRS ; et
lorsqu'une utilisation de l'ensemble de ressources SRS est une commutation d'antenne et lorsqu'une liste commune d'une pluralité d'états TCI incluant l'état TCI est définie pour chacune de la pluralité de ressources SRS de l'ensemble de ressources SRS, l'application de l'état TCI activé par l'élément de commande MAC sur la pluralité de ressources SRS de l'ensemble de ressources SRS.

3. Système comprenant : un terminal (20) selon la revendication 1 et une station de base (10), dans lequel
la station de base (10) comprend :
une section de transmission (120) configurée pour transmettre l'élément de commande MAC.
